Europäisches Patentamt

European Patent Office

Office européen des brevets

(11) Veröffentlichungsnummer: **0 377 891**
**A2**

(12) **EUROPÄISCHE PATENTANMELDUNG**

(21) Anmeldenummer: 89123881.8

(22) Anmeldetag: 23.12.89

(51) Int. Cl.⁵: **C08K 5/3492, C08K 3/00,
C08K 5/00, C08G 18/40,
C08G 18/65, //(C08G18/40,
101:00)**

(30) Priorität: 28.12.88 DE 3844049

(43) Veröffentlichungstag der Anmeldung:
**18.07.90 Patentblatt 90/29**

(84) Benannte Vertragsstaaten:
**AT BE CH DE ES FR GB GR IT LI NL SE**

(71) Anmelder: **BASF Aktiengesellschaft
Carl-Bosch-Strasse 38
D-6700 Ludwigshafen(DE)**

(72) Erfinder: **Genz, Manfred, Dr.
Neuwiesenstrasse 2
D-6700 Ludwigshafen(DE)**
Erfinder: **Reich, Erhard, Dr.
Heinrich-Strasse 11
D-2845 Damme(DE)**
Erfinder: **Leppkes, Reinhard, Dr.
Eschkopfstrasse 2
D-6712 Bobenheim-Roxheim(DE)**
Erfinder: **Lutter, Heinz-Dieter, Dr.
Adalbert-Stifter-Strasse 3
D-6903 Neckargemuend(DE)**
Erfinder: **Ramlow, Gerhard, Dr.
Wintergasse 121
D-6940 Weinheim(DE)**

(54) Verfahren zur Herstellung von flammwidrigen, elastischen Polyurethan-Weichschaumstoffen und niedrigviskose Melamin-Polyether-polyoldispersionen hierfür.

(57) Gegenstände der Erfindung sind ein Verfahren zur Herstellung von flammwidrigen, elastischen PU-Weichschaumstoffen durch Umsetzung von
    a) organischen und/oder modifizierten organischen Polyisocyanaten mit
    b) höhermolekularen Polyolen und
    c) Hexandiol-1,6 und/oder Trimethylolpropan in Gegenwart von
    d) Melamin oder Mischungen aus Melamin und anderen Flammschutzmitteln,
    e) mindestens einem Treibmittel und
    f) mindestens einem Katalysator sowie gegebenenfalls
    g) Hilfsmitteln und/oder Zusatzstoffen und hierfür geeignete niedrigviskose Melamin-Polyether-polyoldispersionen, bestehend aus Melamin, Hexandiol-1,6 und/oder Trimethylolpropan und mindestens einem Polyether-polyol.

EP 0 377 891 A2

# Verfahren zur Herstellung von flammwidrigen, elastischen Polyurethan-Weichschaumstoffen und niedrigviskose Melamin-Polyether-polyoldispersionen hierfür

Die Herstellung von elastischen Polyurethan (PU)-Weichschaumstoffen ist bekannt und wird in zahlreichen Patent- und Literaturpublikationen beschrieben. Beispielhaft genannt seien das Kunststoff-Handbuch, Band VII, Polyurethane, Carl Hanser Verlag, München, 1. Auflage, 1966, herausgegeben von Dr. R. Vieweg und Dr. A. Höchtlen, und 2. Auflage, 1983, herausgegeben von Dr. G. Oertel sowie die Monographie "Integralschaumstoffe" von Dr. H. Piechota und Dr. H. Röhr, 1975, herausgegeben vom gleichen Verlag.

Zur Herstellung von PU-Weichschaumstoffen werden üblicherweise als Polyisocyanate handelsübliche Toluylen-diisocyanate, als polyfunktionelle höhermolekulare Verbindungen Polyoxyalkylen-polyole auf der Grundlage von 1,2-Propylenoxid und/oder Ethylenoxid sowie Mischungen aus derartigen Polyoxyalkylen-polyolen und Pfropf-polyoxyalkylen-polyolen und als Kettenverlängerungsmittel Alkandiol oder hydroxyl- und/oder aminogruppenhaltige Verbindungen mit einer Funktionalität größer als 2, wie z.B. Glycerin oder Alkanolamine verwendet.

Derartige PU-Weichschaumstoffe sind nicht flammwidrig; nachteilig ist insbesondere ihre leichte Entflammbarkeit. Zur Verminderung dieses Nachteils werden den schaumfähigen PU-Mischungen Flammschutzmittel, vorzugsweise halogen- und/oder phosphorhaltige Verbindungen, einverleibt. Der Zusatz dieser Produkte wirkt sich jedoch vielfach negativ auf die mechanischen Eigenschaften der erhaltenen PU-Schaumstoffe aus. Es hat daher nicht an Versuchen gefehlt, neue Flammschutzmittel zu entwickeln und die halogen- und/oder phosphorhaltigen Verbindungen ganz oder zumindest teilweise in PU-Schaumstoffen durch diese zu ersetzen.

Als hierfür geeignete Verbindung wird beispielsweise das bei 354°C schmelzende, polyfunktionelle Melamin genannt. Nach Angaben der DE-A-23 48 838 wird das Melamin in der Polyol- und/oder der Polyisocyanatkomponente suspendiert und die erhaltene Suspension sofort zu isocyanuratgruppenhaltigen, flammfesten PU-Kunststoffen verarbeitet. Nichtentflammbare PU-Hartschaumstoffe werden gemäß US-A-4 221 875 (DE-A-28 09 084) durch Umsetzung von organischen Polyisocyanaten und Polyoxyalkylenpolyolen in Gegenwart von Treibmitteln und Silikonen als oberflächenaktiver Zusatzstoff sowie 20 bis 100 Gew.-Teilen Melamin als Flammschutzmittel pro 100 Gew.-Teilen Polyoxyalkylen-polyol erhalten.

Die EP-A-0 004 618 (US-A-4 258 141) beschreibt ein Verfahren zur Herstellung von schwerentflammbaren PU-Weichschaumstoffen unter Verwendung einer Mischung aus Diphenylmethan-diisocyanaten und Polyphenyl-polymethylen-polyisocyanaten (Roh-MDI) mit einem Gehalt an Diphenylmethandiisocyanat-Isomeren von 40 bis 90 Gew.%, bezogen auf das Gesamtgewicht, als Polyisocyanate und Cyansäurederivate, insbesondere Melamin, als Flammschutzmittel.

Obwohl nach diesen Verfahren die Flammwidrigkeit der PU-Schaumstoffe bedeutend verbessert werden konnte, muß auch hier die starke Sedimentation des Melamins im Polyol, die bereits nach kurzer Lagerzeit auftritt, als nachteilig angesehen werden. Zur Überwindung dieses Nachteils werden in der EP-B-023 987 (US-A-4 293 657) stabile Melamin-Polyol-Dispersionen beschrieben, bei denen das Melamin in situ in dem Polyol in Gegenwart mindestens eines Stabilisators mit einer örtlichen Energiedichte von 10 bis 3000 kW/m$^3$ auf eine Teilchengröße von kleiner als 10 μm zerkleinert wird. Diese zusätzliche Verfahrensmaßnahme ist apparativ aufwendig und kostenintensiv.

Es wurde außerdem versucht durch geeignete Zusatzstoffe die Verarbeitbarkeit von Melamin enthaltenden PU-Formulierungen zu verbessern, ohne die Flammwidrigkeit der erhaltenen Schaumstoffe zu reduzieren. Nach Angaben der DE-A-35 30 519 (GB-A-21 63 762A) wird als flammhemmendes Additiv eine Mischung aus Melamin und einem Additionsprodukt, hergestellt aus Alkanolamin und Isocyanat, die in einem Polyol dispergiert wird, verwendet. Die GB-A-21 77 405A und 21 77 406A beschriebenen Mischungen aus Melamin und Styrol-Acrylnitril-Pfropf-polyoxypropylen-polyoxyethylen-polyolen, dispergiert in üblichen Polyoxypropylen-polyoxyethylen-polyolen, sowie gegebenenfalls phospor- und/oder halogenhaltigen Verbindungen als Flammschutzadditiv. Nach diesen Verfahren hergestellte Schaumstoffe zeigen zwar eine gute Flammbeständigkeit, ihre mechanischen Eigenschaften genügen jedoch vielfach nicht den gestellten Anforderungen. Nachteilig ist ferner, daß die Formulierungen in Mehrkomponenten-Mischvorrichtungen verarbeitet werden müssen, da die Melamin enthaltende Komponente nicht ausreichend lagerstabil ist.

Die Aufgabe der vorliegenden Erfindung bestand darin, flammwidrige elastische PU-Schaumstoffe, vorzugsweise Formschaumstoffe, mit guten mechanischen Eigenschaften unter Verwendung von Melamin als Flammschutzmittel, insbesondere nach dem Zweikomponenten-Verfahren, herzustellen.

Hierbei sollten die mechanischen Eigenschaften der erhaltenen Verfahrensprodukte möglichst verbessert und die angewandten Verarbeitungsbedingungen vereinfacht werden. Durch geeignete Maßnahmen sollte insbesondere die Viskosität der Melamin enthaltenden Systemkomponente reduziert werden.

Diese Aufgabe könnte überraschenderweise gelöst werden durch die Verwendung von ausgewählten Kettenverlängerungs- und/oder Vernetzungsmitteln in Verbindung mit Melamin oder Melamin enthaltenden Mischungen als Flammschutzmittel.

Gegenstand der Erfindung ist somit ein Verfahren zur Herstellung von flammwidrigen, elastischen PU-Weichschaumstoffen durch Umsetzung von

a) organischen und/oder modifizierten organischen Polyisocyanaten mit

b) höhermolekularen Polyolen und

c) Kettenverlängerungs- und/oder Vernetzungsmitteln in Gegenwart von

d) mindestens einem Flammschutzmittel,

e) mindestens einem Treibmittel und

f) mindestens einem Katalysator sowie gegebenenfalls

g) Hilfsmitteln und/oder Zusatzstoffen, das dadurch gekennzeichnet ist, daß man als

Kettenverlängerungs- und/oder Vernetzungsmittel (c) Hexandiol-1,6, Trimethylolpropan oder Mischungen davon und als

Flammschutzmittel (d) Melamin oder Mischungen aus Melamin und anderen Flammschutzmitteln verwendet.

Gegenstände der Erfindung sind ferner ein Verfahren zur Herstellung von flammwidrigen, weichelastischen PU-Formschaumstoffen, insbesondere von Flugzeugsitzen mit einer Dichte von 35 bis 100 g/Liter, nach der Hochdruckschäumtechnik in einem im wesentlichen geschlossenen Formwerkzeug aus den vorgenannten Aufbaukomponenten (a) bis (f) sowie gegebenenfalls (g) gemäß Anspruch 2 und niedrigviskose Melamin-Polyetherpolyol-dispersionen, die bestehen aus

1 bis 150 Gew.-Teilen, vorzugsweise 70 bis 130 Gew.-Teilen, Melamin mit einer Teilchengröße von durchschnittlich 20 bis 40 μm und einer Schüttdichte im Bereich von 500 bis 650 g/Liter,

0,1 bis 5 Gew.-Teilen, vorzugsweise 0,5 bis 3 Gew.-Teilen, Hexandiol-1,6, Trimethylolpropan oder Mischungen davon und

100 Gew.-Teilen mindestens eines Polyether-polyols, eines polymermodifizierten Polyether-polyols oder Mischungen davon, wobei die Polyether-polyole, polymermodifizierten Polyether-polyole oder die Mischung eine durchschnittliche Funktionalität von 1,8 bis 3,0 und ein durchschnittliches Molekulargewicht von 3600 bis 6500 besitzen nach Anspruch 10.

Außerdem wurden spezielle Ausgestaltungen der erfindungsgemäßen Verfahren gemäß den Unteransprüchen 3 bis 9 gefunden.

Durch die Verwendung von Hexandiol-1,6, Trimethylolpropan oder Mischungen aus Hexandiol-1,6 und Trimethylolpropan als Kettenverlängerungs und/oder Vernetzungsmittel wurden in Verbindung mit Melamin oder Melamin enthaltenden Flammschutzmittelmischungen sowie höhermolekularen Polyolen, insbesondere Polyether-polyolen, überraschenderweise auf Hochdruckmaschinen gut verarbeitbare Systemkomponenten erhalten, deren Viskosität im Vergleich zu konventionellen Systemen um 10 bis 25 % reduziert wurde. Die erfindungsgemäß hergestellten PU-Schaumstoffe sind sehr gut flammwidrig und besitzen trotz des relativ hohen Melamingehalts ein gutes mechanisches Eigenschaftsniveau. Erwähnenswert sind insbesondere die gesteigerte Dehnbarkeit, erhöhte Weiterreißfestigkeit und der verbesserte Druckverformungsrest.

Zu den für das erfindungsgemäße Verfahren verwendbaren Ausgangskomponenten ist folgendes auszuführen:

a) Zur Herstellung der flammwidrigen, elastischen PU-Weichschaumstoffe, vorzugsweise der PU-Weichformschaumstoffe eignen sich die bekannten organischen, z.B. aliphatischen, cycloaliphatischen, araliphatischen, cycloaliphatisch-aromatischen und vorzugsweise aromatischen Di-und/oder Polyisocyanate. Im einzelnen seien als aromatische Polyisocyanate beispielhaft genannt: Mischungen aus 4,4′- und 2,4′- Diphenylmethan-diisocyanaten (MDI), Mischungen aus MDI-Isomeren und Polyphenyl-polymethylen-polyisocyanaten, sogenanntes Roh-MDI, mit einem Gehalt an MDI-Isomeren von mindestens 50 Gew.%, vorzugsweise von 60 bis 90 Gew.% und mehr, bezogen auf das Gesamtgewicht der Mischung, 2,4- und 2,6-Toluylen-diisocyanat sowie die entsprechenden handelsüblichen Isomerenmischungen, Mischungen aus Toluylen-diisocyanaten und MDI und/oder Roh-MDI, beispielsweise solchen mit einem MDI-Gehalt von 30 bis 90 Gew.% vorzugsweise 40 bis 80 Gew.%, bezogen auf das Gesamtgewicht des Roh-MDI's.

Geeignet sind auch sogenannte modifizierte mehrwertige Isocyanate, d.h. Produkte, die durch chemische Umsetzung organischer Di- und/oder Polyisocyanate erhalten werden. Beispielhaft genannt seien Ester-, Harnstoff-, Biuret-, Allophanat-, Isocyanurat- und vorzugsweise Carbodiimid-, Uretonimin- und/oder Urethangruppen enthaltende Di-und/oder Polyisocyanate. Im einzelnen kommen beispielsweise in Betracht: Urethangruppen enthaltende Prepolymere mit einem NCO-Gehalt von 14 bis 2,8 Gew.%, vorzugsweise von 12 bis 3,5 Gew.% oder Quasiprepolymere mit einem NCO-Gehalt von 35 bis 14 Gew.%, vorzugsweise von 34 bis 22 Gew.%, wobei mit Urethangruppen modifizierte Polyisocyanate aus Toluylen-diisocyanaten, insbesondere einem NCO-Gehalt von 34 bis 28 Gew.% und solche aus 4,4'-MDI, 4,4'- und 2,4'-MDI-Isomeren-mischungen oder Roh-MDI, insbesondere einen NCO-Gehalt von 28 bis 22 Gew.%, bezogen auf das Gesamtgewicht, aufweisen und hergestellt werden durch Umsetzung von Diolen, Oxalkylen-glykolen und/oder Polyoxyalkylen-glykolen mit Molekulargewichten von 62 bis 6000, vorzugsweise von 134,18 bis 4200 mit Toluylen-diisocyanaten, 4,4'-MDI, MDI-Isomerengemischen und/oder Roh-MDI z.B. bei Temperaturen von 20 bis 110°C, vorzugsweise von 50 bis 90°C, wobei als Oxalkylen- und Polyoxyalkylen-glykole, die einzeln oder als Gemisch eingesetzt werden können, beispielhaft genannt seien: Diethylen-, Dipropylen-, Polyoxyethylen-, Polyoxypropylen- und Polyoxypropylen-polyoxyethylen-glykole, Carbodiimidgruppen und/oder Isocyanuratgruppen enthaltende Polyisocyanate, z.B. auf MDI-Isomeren- und/oder Toluylen-diisocyanat-Basis.

Besonders bewährt haben sich jedoch und daher vorzugsweise Anwendung finden Toluylen-diisocyanat-2,4, Toluylen-diisocyanat-2,6, Mischungen aus Toluylen-diisocyanat-2,4 und -2,6 und Urethangruppen enthaltende Polyisocyanate mit einem NCO-Gehalt von 34 bis 28 Gew.%, besonders bevorzugt 34 bis 30 Gew.%, hergestellt aus 2,4- und 2,6-Toluylen-diisocyanat-Gemischen, zweckmäßigerweise im Gewichtsverhältnis von 80:20, und Polyoxypropylen-polyoxyethylen-glykolen mit einem Molekulargewicht von 2800 bis 4200.

b) Als höhermolekulare Polyole (b) finden zweckmäßigerweise solche mit einer Funktionalität von durchschnittlich 1,8 bis 4,0, vorzugsweise 1,8 bis 3,0 und insbesondere 2,0 bis 2,4 und einem Molekulargewicht von durchschnittlich 2200 bis 8000, vorzugsweise 3600 bis 6500 Verwendung, ausgewählt aus der Gruppe der Polyether-polyole, Polyester-polyole, Polythioether-polyole, Polyesteramide, Polyacetale, hydroxylgruppenhaltigen aliphatischen Polycarbonate oder Mischungen aus mindestens zwei der genannten Polyole. Vorzugsweise Anwendung finden Polyester-polyole und/oder insbesondere Polyether-polyole. Geeignet sind ferner Polyole mit Molekulargewichten unter 2200, beispielsweise von 250 bis 2200. Diese können jedoch nur in solchen Mengen und im Gemisch mit höhermolekularen Polyolen eingesetzt werden, so daß Polyolmischungen mit Molekulargewichten von durchschnittlich mindestens 2200 resultieren.

Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei-und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. $\epsilon$-Caprolacton oder Hydroxycarbonsäuren, z.B. $\omega$-Hydroxycapronsäure.

Zur Herstellung der Polyester-polyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgasen, wie z.B. Stickstoff, Kohlenmonoxid, Helium, Argon u.a. in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.

Die erhaltenen Polyester-polyole besitzen vorzugsweise eine Funktionalität von 2 bis 4, insbesondere 2 bis 3 und ein Molekulargewicht von 1200 bis 3000, vorzugsweise 2200 bis 3000 und insbesondere 2200 bis 2500.

Insbesondere als Polyole verwendet werden jedoch Polyether-polyole, die nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls das 2 bis 4, vorzugsweise 2 bis 3 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N′-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4′-, 2,4′- und 2,2′-Diamino-diphenylmethan.

Als Startermoleküle kommen ferner in Betracht: Alkanolamine, wie Ethanolamin, Diethanolamin, N-Methyl- und N-Ethyl-ethanolamin, N-Methyl- und N-Ethyl-diethanolamin und Triethanolamin und Ammoniak. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin und Trimethylol-propan sowie Pentaerythrit.

Die Polyether-polyole, vorzugsweise Polyoxypropylen- und Polyoxypropylen-polyoxyethylen-polyole, besitzen eine Funktionalität von 1,8 bis 4, vorzugsweise 1,8 bis 3,0 und insbesondere 2 bis 2,4 und Molekulargewichte von 2200 bis 8000, vorzugsweise 3600 bis 6500 und insbesondere 3900 bis 6000 und geeignete Polyoxytetramethylen-glykole ein Molekulargewicht bis ungefähr 3500, vorzugsweise von 250 bis 2200. Insbesondere eingesetzt werden Polyoxypropylen-polyoxyethylen-polyole mit mehr als 50 %, vorzugsweise mehr als 70 % endständigen primären Hydroxylgruppen.

Als Polyether-polyole eignen sich ferner polymermodifizierte Polyether-polyole, vorzugsweise Pfropfpolyether-polyole. Diese können hergestellt werden durch in situ Polymerisation von olefinisch ungesättigten Monomeren oder -gemischen, wie z.B. Styrol, Acrylnitril oder vorzugsweise Styrol-Acrylnitrilmischungen, in Polyoxyalkylen-polyolen, z.B. den oben beschriebenen Polyoxyalkylen-polyolen, analog den Angaben der deutschen Patentschriften Nrs. 11 11 394, 12 22 669 (US 3 304 273, 3 383 351, 3 523 093), 11 52 536 (GB 1 040 452) und 11 52 537 (GB 987 618) oder durch Dispergieren von Pfropf-polymeren, die zuvor durch radikalische Polymerisation in Lösungsmitteln hergestellt wurden, in Polyoxyalkylen-polyolen analog den Angaben der US-Patentschriften 3 391 092, 4 014 846, 4 093 573. Zur Herstellung der Pfropfpolyoxyalkylen-polyole eignen sich sowohl die obengenannten gesättigten Polyoxyalkylen-polyole, die gemäß US Reissue Patent Nr. 28 715 im wesentlichen frei sind von ethylenisch ungesättigten Einheiten als auch olefinisch ungesättigte Polyoxyalkylen-polyole wie sie z.B. in der US Patentschrift 3 652 659 und im US Reissue Patent 29 014 beschrieben werden. Als polymermodifizierte Polyoxyalkylen-polyole eignen sich ferner Polyharnstoff-, Polyhydrazid- oder tert. Aminogruppen gebunden enthaltende Polyurethanpolyoxyalkylen-polyoldispersionen, wie sie beispielsweise beschrieben werden in der EP-B-0 011 752 (US 4 304 708), US-A-4 374 209 und DE-A-32 31 497. Die polymermodifizierten Polyoxyalkylen-polyole, die zweckmäßigerweise 2 bis 35 Gew.%, vorzugsweise 3 bis 25 Gew.%, bezogen auf das Gesamtgewicht, Polymerpartikel besitzen, können ebenso wie die Polyoxyalkylen-polyole einzeln oder in Form von Mischungen verwendet werden.

Bewährt haben sich beispielsweise Polyolmischungen (b), bestehend aus b1) höhermolekularen Polyether-polyolen mit einer Funktionalität von durchschnittlich 1,8 bis 3 und
b2) höhermolekularen polymermodifizierten Polyether-polyolen mit einer Funktionalität von durchschnittlich 1,8 bis 3, ausgewählt aus der Gruppe der Pfropfpolyether-polyole, der Polyharnstoff-, Polyhydrazidund/oder tert. Aminogruppen gebunden enthaltenden Polyurethan-Polyether-polyoldispersionen. Nach einer bevorzugten Ausführungsform besteht die Polyolmischung (b) zweckmäßigerweise aus
b1) mindestens 70 Gew.%, vorzugsweise 75 bis 99,9 Gew.%, bezogen auf das Gewicht der Mischung (b), mindestens eines Polyether-polyols mit einer durchschnittlichen Funktionalität von 1,8 bis 3, insbesondere 2 bis 2,4 und einem durchschnittlichen Molekulargewicht von 3600 bis 6500, insbesondere 3900 bis 6000 und

5

b2) weniger als 30 Gew.%, vorzugsweise 25 bis 0,1 Gew.%, bezogen auf das Gewicht der Mischung (b), mindestens eines polymermodifizierten Polyether-polyols mit einer Funktionalität von durchschnittlich 1,8 bis 3,0, insbesondere 2 bis 2,4 und einem durchschnittlichen Molekulargewicht von 3600 bis 6500, insbesondere 3900 bis 6000, ausgewählt aus der Gruppe der Polyharnstoff-, Polyhydrazid- und tert. Aminogruppen gebunden enthaltenden Polyurethan-Polyether-polyoldispersionen, vorzugsweise der Pfropfpolyether-polyole oder von Mischungen davon.

Als hydroxylgruppenhaltige Polyacetale kommen z.B. die aus Glykolen, wie Diethylenglykol, Triethylenglykol, 4,4'-Dihydroxyethoxy-diphenyl-dimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie Propandiol-1,3, Butandiol-1,4 und/oder Hexandiol-1,6, Diethylenglykol, Triethylenglykol oder Tetraethylenglykol mit Diarylcarbonaten, z.B. Diphenylcarbonat, oder Phosgen hergestellt werden können.

Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.

c) Zur Herstellung der flammwidrigen, elastischen PU-Weichschaumstoffe oder weichelastischen PU-Formschaumstoffe werden erfindungsgemäß als Kettenverlängerungs- und/oder Vernetzungsmittel (c) Hexandiol-1,6, Trimethylolpropan oder Mischungen aus Hexandiol-1,6 und Trimethylolpropan verwendet. Das Hexandiol-1,6 und/oder Trimethylolpropan kommt zweckmäßigerweise in solchen Gewichtsmengen zur Anwendung, daß pro 100 Gew.-Teile der höhermolekularen Polyole (b) 0,1 bis 5 Gew.-Teile, vorzugsweise 0,5 bis 3 Gew.-Teile (c) in der Reaktionsmischung vorliegen.

d) In Verbindung mit Hexandiol-1,6 und/oder Trimethylolpropan wird als Flammschutzmittel (d) erfindungsgemäß Melamin verwendet, das in handelsüblicher Form angewandt werden kann und üblicherweise eine durchschnittliche Korngröße von 5 bis 50 μm und folgende Korngrößenverteilung aufweist

10 Gew.% der Teilchen sind größer als 30 μm
30 Gew.% der Teilchen sind größer als 24 μm
50 Gew.% der Teilchen sind größer als 20 μm
70 Gew.% der Teilchen sind größer als 16 μm
90 Gew.% der Teilchen sind größer als 11 μm.

Besonders bewährt hat sich und daher vorzugsweise eingesetzt wird Melamin mit einer Korngröße von durchschnittlich 20 bis 50 μm, insbesondere von 20 bis 40 μm und einem Schüttgewicht von 300 bis 800 g/Liter, insbesondere von 500 bis 650 g/Liter. Das Melamin kommt zweckmäßigerweise in einer Menge von 5 bis 150 Gew.-Teilen, vorzugsweise 50 bis 130 Gew.-Teilen und insbesondere von 70 bis 100 Gew.-Teilen pro 100 Gew.-Teilen höhermolekularen Polyole (b) zur Anwendung.

Zweckmäßigerweise wird ausschließlich Melamin als Flammschutzmittel verwendet. Es kann jedoch auch vorteilhaft sein zur Erzielung spezieller Effekte, wie z.B. Homogenisierung und Stabilisierung der Ausgangskomponentengemische, Reduzierung der Rauchentwicklung im Brandfalle, gezielte Verbesserung von mechanischen Eigenschaften der hergestellten PU-Schaumstoffe u.a. das Melamin mit anderen organischen oder anorganischen Flammschutzmittel zu kombinieren, so daß dieses in reduzierten Mengen eingesetzt werden kann. Als besonders geeignet zur Verbesserung der Flammwidrigkeit erweisen sich Mischungen von Flammschutzmitteln (d), die enthalten

d1) 70 bis 100 Gew.-Teile Melamin,

d2) 0 bis 30 Gew.-Teile, vorzugsweise 3 bis 15 Gew.-Teile Stärke, zweckmäßigerweise ausgewählt aus der Gruppe der Mais-, Reis-, Kartoffel- oder Weizenstärke oder Mischungen davon sowie gegebenenfalls chemisch modifizierter Stärkederivate und

d3) 0 bis 30 Gew.-Teile, vorzugsweise 3 bis 15 Gew.-Teile mindestens eines zusätzlichen Flammschutzmittels aus der Gruppe Trikresylphosphat, Tris-(2-chlorethyl)-phosphat, Tris-(2-chlorpropyl)-phosphat, Tris-(1,3-dichlorpropyl)-phosphat, Tris-(2,3-dibrompropyl)-phosphat, Tetrakis-(2-chlorethyl)-ethylendiphosphat, Aluminiumoxidhydrat, Ammoniumsulfat, der Ammoniumphosphate und insbesondere der Ammoniumpolyphosphate,

wobei die Gew.-Teile jeweils bezogen sind auf 100 Gew.-Teile der höhermolekularen Polyole (b).

Bewährt haben sich ferner Mischungen von Flammschutzmitteln (d), die enthalten

d1) 70 bis 100 Gew.-Teile Melamin und

d2) 3 bis 30 Gew.-Teile mindestens einer der vorgenannten Stärken oder der entsprechenden Stärkederivate

oder

d3) 1 bis 30 Gew.-Teile Ammoniumpolyphoshat,

wobei die Gewichtsteile bezogen sind auf 100 Gew.-Teile der höhermolekularen Polyole (b).

Als modifiziertes Ammoniumpolyphosphat findet insbesondere eine modifizierte, feinkörnige, schwerlösliche Verbindung mit der allgemeinen Formel

$$H_{(n-m)+2} (NH_4)_m P_nO_{3n+1}$$

Verwendung, in der n eine ganze Zahl mit einem Durchschnittswert von etwa 20 bis 800, vorzugsweise ungefähr 700 bedeutet und das Verhältnis von m zu n etwa 1 beträgt und die Modifikation besteht aus etwa 80 bis 99,5 Masse% des vorgenannten Ammoniumpolyphosphat und etwa 0,5 bis 20 Masse% eines gehärteten Epoxidharzes mit einem Epoxid-Äquivalentgewicht von etwa 170 bis etwa 220, das die einzelnen Ammoniumpolyphosphatpartikelchen umhüllt. Derartige Ammoniumpolyphosphate können beispielsweise bezogen werden von der Hoechst Aktiengesellschaft unter dem Warenzeichen Exolit®.

e) Zu Treibmitteln (e), welche zur Herstellung der PU-Weichschaumstoffe verwendet werden können, gehört vorzugsweise Wasser, das mit Isocyanatgruppen unter Bildung von Kohlendioxid reagiert. Die Wassermengen, die zweckmäßigerweise eingesetzt werden, betragen 0,1 bis 6 Gew.-Teile, vorzugsweise 1,0 bis 3,5 Gew.-Teile und insbesondere 2,5 bis 3,0 Gew.-Teile, bezogen auf 100 Gew.-Teile der höhermolekularen Polyole (b).

Im Gemisch mit wasser können auch physikalisch wirkende Treibmittel eingesetzt werden. Geeignet sind Flüssigkeiten, welche gegenüber den organischen, gegebenenfalls modifizierten Polyisocyanaten (a) inert sind und Siedepunkte unter 100°C, vorzugsweise unter 50°C, insbesondere zwischen -50°C und 30°C bei Atmosphärendruck aufweisen, so daß sie unter dem Einfluß der exothermen Polyadditionsreaktion verdampfen. Beispiele derartiger, vorzugsweise verwendbarer Flüssigkeiten sind Kohlenwasserstoffe, wie Pentan, n- und iso-Butan und Propan, Ether, wie Dimethylether und Diethylether, Ketone, wie Aceton und Methylethylketon, Ethylacetat und vorzugsweise halogenierte Kohlenwasserstoffe, wie Methylenchlorid, Trichlorfluormethan, Dichlordifluormethan, Dichlormonofluormethan, 1,1,1-Dichlorfluorethan, 1,1,1-Chlordifluorethan, Dichlortetrafluorethan und 1,1,2-Trichlor-1,2,2-trifluorethan, sowie Edelgase, wie z.B. Krypton. Auch Gemische dieser niedrigsiedenden Flüssigkeiten untereinander und/oder mit anderen substituierten oder unsubstituierten Kohlenwasserstoffen können verwendet werden.

Die neben Wasser erforderliche Menge an physikalisch wirkenden Treibmitteln kann in Abhängigkeit von der gewünschten Schaumstoffdichte auf einfache Weise ermittelt werden und beträgt ungefähr 0 bis 25 Gew.-Teile, vorzugsweise 0 bis 18 Gew.-Teile pro 100 Gew.-Teile der höhermolekularen Polyole (b). Gegebenenfalls kann es zweckmäßig sein, die gegebenenfalls modifizierten Polyisocyanate (a) mit dem physikalisch wirkenden Treibmittel zu mischen und dadurch die Viskosität zu verringern.

f) Zur Beschleunigung der Umsetzung zwischen den höhermolekularen Polyolen (b), Hexandiol-1,6 und/oder Trimethylolpropan (c) und Wasser als Treibmittel (e) und den organischen Polyisocyanaten und/oder modifizierten Polyisocyanaten (a) werden der Reaktionsmischung übliche Polyurethankatalysatoren einverleibt. Zweckmäßigerweise verwendet werden basische Polyurethankatalysatoren, beispielsweise tertiäre Amine, wie Dimethylbenzylamin, Dicyclohexylmethylamin, Dimethylcyclohexylamin, N,N,N',N'-Tetramethyl-diamino-diethylether, Bis-(dimethylaminopropyl)-harnstoff, N-Methyl- bzw. N-Ethylmorpholin, Dimethylpiperazin, N-Dimethylaminoethylpiperidin, 1,2-Dimethylimidazol, 1-Azabicyclo-(2,2,0)-octan, Dimethylaminoethanol, 2-(N,N-Dimethylaminoethoxy)ethanol, N,N',N''-Tris-(dialkylaminoalkyl)-hexahydrotriazin, z.B. N,N',N''-Tris-(dimethylaminopropyl)-s-hexahydrotriazin und insbesondere Triethylendiamin. Geeignet sind jedoch auch Metallsalze, wie Eisen(II)-chlorid, Zinkchlorid, Bleioctoat und vorzugsweise Zinnsalze, wie Zinndioctoat, Zinndiethylhexoat und Dibutylzinndilaurat sowie insbesondere Mischungen aus tertiären Aminen und organischen Zinnsalzen. Bewährt hat sich insbesondere eine Katalysatorkombination, die als wesentliche Komponenten enthält: Triethylendiamin, Bis-(dimethylaminoethyl)ether, 2-(Dimethylaminoethoxy)ethanol, Dibutylzinndilaurat und Dibutyldilaurylzinnmercaptid und wobei die genannten Verbindungen vorzugsweise in folgenden Mengenverhältnissen vorliegen: 0,2 bis 1,5 zu 0,1 bis 0,2 zu 0,1 bis 0,25 zu 0,1 bis 0,3 zu 0,05 bis 0,15.

Eingesetzt werden zweckmäßigerweise 0,1 bis 10 Gew.%, vorzugsweise 0,3 bis 3 Gew.% Katalysator auf Basis tert. Amine und/oder 0,01 bis 0,5 Gew.%, vorzugsweise 0,03 bis 0,25 Gew.%, Metallsalze oder 0,1 bis 5 Gew.%, vorzugsweise 0,3 bis 3,5 Gew.% der vorgenannten Katalysatorkombination, bezogen auf das Gewicht der höhermolekularen Polyole (b).

g) Der Reaktionsmischung können gegebenenfalls auch noch Hilfsmittel und/oder Zusatzstoffe (g) einverleibt werden. Genannt seien beispielsweise oberflächenaktive Stoffe, Stabilisatoren, Hydrolyseschutzmittel, Porenregler, fungistatisch und bakteriostatisch wirkende Substanzen, Farbstoffe, Pigmente und Füllstoffe.

In Betracht, kommen beispielsweise oberflächenaktive Substanzen, welche zur Unterstützung der

7

Homogenisierung der Ausgangsstoffe dienen und gegebenenfalls auch geeignet sind, die Zellstruktur der Schaumstoffe zu regulieren. Genannt seien beispielhaft Siloxan-Oxyalkylen-Mischpolymerisate und andere Organopolysiloxane, oxethylierte Alkylphenole, oxethylierte Fettalkohole, Paraffinöle, Rizinusöl- bzw. Rizinolsäureester und Türkischrotöl, die in Mengen von 0,05 bis 5, vorzugsweise 0,1 bis 2 Gew.-Teilen pro 100 Gew.-Teilen der höhermolekularen Polyole (b) angewandt werden.

Nähere Angaben über die oben genannten anderen üblichen Hilfs- und Zusatzstoffe sind der Fachliteratur, beispielsweise der Monographie von J.H. Saunders und K.C. Frisch "High Polymers", Band XVI, Polyurethanes, Teil 1 und 2, Verlag Interscience Publishers, 1962 bzw. 1964 oder dem Kunststoff-Handbuch, Polyurethane, Band VII, Hanser-Verlag, München, Wien, 1. und 2. Auflage, 1966 und 1983 zu entnehmen.

Zur Herstellung der PU-Weichschaumstoffe werden die organischen, gegebenenfalls modifizierten Polyisocyanate (a), die höhermolekularen Polyole (b) und die Kettenverlängerungs- und/oder Vernetzungsmittel (c) in Gegenwart von Flammschutzmitteln (d), Treibmitteln (e), Katalysatoren (f) und gegebenenfalls Hilfsmitteln und/oder Zusatzstoffen (g) bei Temperaturen von 0 bis 100°C, vorzugsweise 15 bis 80°C in solchen Mengenverhältnissen zur Reaktion gebracht, daß pro NCO-Gruppe 0,5 bis 2, vorzugsweise 0,8 bis 1,3 und insbesondere ungefähr ein reaktive(s) wasserstoffatom(e) gebunden an die Ausgangskomponenten (b) und (c) vorliegen.

Die PU-Weichschaumstoffe werden zweckmäßigerweise nach dem one shot-Verfahren durch Vermischen von zwei Komponenten A und B hergestellt, wobei die Ausgangskomponenten (b) bis (f) und gegebenenfalls (g) zu der sogenannten A-Komponente vereinigt und als B-Komponente die Ausgangskomponente (a) gegebenenfalls im Gemisch mit (d), (g) und inerten, physikalisch wirkenden Treibmitteln verwendet werden. Da die A-Komponente mehrere Monate lagerstabil ist, müssen die A- und B-Komponente vor Herstellung der PU-Weichschaumstoffe nur noch intensiv gemischt werden. Die Reaktionsmischung kann in offenen oder geschlossenen Formwerkzeugen verschäumt werden; sie eignet sich ferner zur Herstellung von Blockschaumstoffen.

Wie bereits dargelegt wurde, findet das erfindungsgemäße Verfahren vorzugsweise Anwendung zur Herstellung von weichelastischen PU-Formschaumstoffen. Die Reaktionsmischung wird hierzu mit einer Temperatur von 15 bis 80°C, vorzugsweise 30 bis 65°C in ein zweckmäßigerweise metallisches, temperierbares Formwerkzeug eingebracht. Die Formwerkzeugtemperatur beträgt üblicherweise 20 bis 90°C, vorzugsweise 35 bis 70°C. Die Reaktionsmischung läßt man unter Verdichtung z.B. bei Verdichtungsgraden von 1,1 bis 8, vorzugsweise von 2 bis 6 in dem geschlossenen Formwerkzeug aushärten.

Die nach dem erfindungsgemäßen Verfahren hergestellten PU-Weichschaumstoffe besitzen Dichten von 35 bis 100 g/Liter, vorzugsweise 40 bis 80 g/Liter. Sie sind gut flammwidrig, wobei sie den Korrosinbrennertest (FAR 25.853(c)) bestehen und weisen ein gutes mechanisches Eigenschaftsniveau auf. Die Formschaumstoffe finden vorzugsweise Verwendung als Polsterelemente z.B. als Sitzpolster, Armlehnen, Kopfstützen, Sonnenblenden und Sicherheitsabdeckungen in Fahrzeugkabinen, vorzugsweise Kraftfahrzeugen und Flugzeugen, wobei insbesondere Flugzeugsitze mit Dichten von 35 bis 100 g/Liter hergestellt werden.

Die niedrigviskosen Melamin-Polyether-polyoldispersionen finden Verwendung zur Herstellung von kompakten oder zelligen Polyisocyanat-Polyadditionsprodukten, beispielsweise zur Herstellung von Urethan-, Isocyanurat- oder Urethan- und Isocyanuratgruppen enthaltenden flexiblen, halbharten oder harten Schaumstoffen, kompakten oder zelligen Elastomeren und vorzugsweise weichelastischen, flammwidrigen PU-Schaumstoffen.

Die in den Beispielen genannten Teile beziehen sich auf das Gewicht.

Beispiel 1

A-Komponente:

Mischung aus
75 Teilen eines mit Glycerin gestarteten Polyoxypropylen (86 Gew.%)-polyoxyethylen (14 Gew.%)-polyols mit einem durchschnittlichen Molekulargewicht von 6000,
10 Teilen eines mit Trimethylolpropan gestarteten Pfropf-polyoxypropylen (84 Gew.%)-polyoxyethylen-(16 Gew.%)-polyols mit einem durchschnittlichen Molekulargewicht von ungefähr 6000, und einem Pfropfpolymergehalt von 20 Gew.%, bezogen auf das Gesamtgewicht, hergestellt unter Verwendung einer Acrylnitril-Styrol-Mischung zur Pfropfung,
20 Teilen eines Polyoxypropylen (81 Gew.%)-polyoxyethylen (19 Gew.%)-glykols, mit einem durchschnittlichen Molekulargewicht von ungefähr 3900, hergestellt unter Verwendung von Dipropylenglykol als Startermolekül,

1,2 Teilen Silicon-Stabilisator (Silicon DC 5043 der Firma Dow Corning),

2,4 Teilen Wasser,

10 Teilen Trichlorfluormethan,

0,42 Teilen einer 33 gew.%igen Lösung von Triethylendiamin in Dipropylenglykol,

0,2 Teilen 2-(Dimethylaminoethoxy)ethanol,

0,12 Teilen Bis-(dimethylaminoethyl)ether,

1,0 Teilen Trimethylolpropan und

100 Teilen Melamin

**B-Komponente:**

Mischung aus
95 Teilen eines Urethangruppen enthaltenden Quasiprepolymers mit einem NCO-Gehalt von 31 Gew.% und einer Viskosität von 52 m·Pas bei 25°C, hergestellt aus einem 2,4-/2,6-Toluylendiisocyanat-Isomerengemisch im Gewichtsverhältnis 80:20 und einem Polyoxypropylen-polyoxyethylen-glykol mit einem Molekulargewicht von 3900 und

5 Teilen Trichlorethylphosphat.

100 Teile der A-Komponente und
22 Teile der B-Komponente wurden, entsprechend einem NCO-Index von 100, intensiv gemischt und die Reaktionsmischung mit einer Temperatur von 23°C in ein auf 50°C temperiertes metallisches Formwerkzeug mit der inneren Hohlraumform eines Flugzeugsitzes in einer solchen Menge eingebracht, daß sich im geschlossenen Formwerkzeug ein Verdichtungsgrad von 1,2 einstellte.

Das Formteil wurde nach 12 Minuten entformt und 24 Stunden bei Raumtemperatur gelagert.

An dem flammwidrigen Formkörper wurden folgende mechanische Eigenschaften gemessen:

Raumgewicht [g/l]: 80

Zugfestigkeit nach DIN 53 571 [KPa]: 70

Dehnung nach DIN 53 571 [%]: 52

Weiterreißfestigkeit nach DIN 53 575 [N/mm]: 0,42

**Beispiel 2**

**A-Komponente:**

analog Beispiel 1, mit der Änderung, daß anstelle des Melamins als Flammschutzmittel eine Mischung aus

85 Gew.-Teilen Melamin,

10 Gew.-Teilen Weizenstärke und

5 Gew.-Teilen Ammoniumpolyphosphat (Exolit® 422 der Firma Hoechst AG) verwendet wurde.

**B-Komponente:**

Urethangruppen enthaltendes Quasiprepolymer mit einem NCO-Gehalt von 31 Gew.% und einer Viskosität von 52 mPas bei 25°C, hergestellt aus einem 2,4- und 2,6-Toluylen-diisocyanat-Isomerengemisch (Gewichtsverhältnis 80:20) und einem mit Dipropylenglykol gestarteten Polyoxypropylenpolyoxyethylen-glykol mit einem Molekulargewicht von 3900.

100 Gew.-Teile der A-Komponente und 21 Gew.-Teile der B-Komponente wurden analog den Angaben des Beispiels 1 zu einem flexiblen Polyurethan-Formschaumstoff umgesetzt.

Die mechanischen Eigenschaften des erhaltenen flexiblen, flammwidrigen Polyurethan-Formschaumstoffs entsprachen im wesentlichen dem nach Beispiel 1 erhaltenen Produkt.

**Beispiel 3**

A-Komponente:

analog Beispiel 1, wobei jedoch anstelle von Melamin als Flammschutzmittel eine Mischung aus
75 Gew.-Teilen Melamin und
25 Gew.-Teilen Ammoniumpolyphosphat (Exolit® 422 der Firma Hoechst AG) verwendet wurde.

B-Komponente:

Urethangruppen enthaltendes Quasiprepolymer mit einem NCO-Gehalt von 31 Gew.%, hergestellt aus einem 2,4- und 2,6-Toluylen-diisocyanat-Isomerengemisch (Gewichtsverhältnis 80:20) und einem mit Trimethylolpropan gestarteten Polyoxypropylen-polyoxyethylen-polyol mit einem Molekulargewicht von 6200.

100 Gew.-Teile der A-Komponente und 21 Gew.-Teile der B-Komponente wurden analog den Angaben des Beispiels 1 zu einem flexiblen Polyurethan-Formschaumstoff umgesetzt.

An dem erhaltenen flammwidrigen Formkörper wurden folgende mechanische Eigenschaften gemessen:
Raumgewicht [g/l]: 75
Zugfestigkeit nach DIN 53 571 [KPa]: 80
Dehnung nach DIN 53 571 [%]: 160
Weiterreißfestigkeit nach DIN 53 575 [N/mm]: 0,73
Druckverformungsrest nach DIN 53 572 [%]: 21

Beispiel 4

A-Komponente:

analog Beispiel 1, wobei jedoch anstelle von Melamin als Flammschutzmittel eine Mischung aus
85 Gew.-Teilen Melamin und
15 Gew.-Teilen Kartoffelstärke
verwendet wurde.

B-Komponente:

Mischung aus 2,4- und 2,6-Toluylen-diisocyanat im Gewichtsverhältnis 80:20.

100 Gew.-Teile der A-Komponente und 15 Gew.-Teile der B-Komponente wurden analog den Angaben des Beispiels 1 zu einem flexiblen Polyurethan-Formschaumstoff umgesetzt.

An dem erhaltenen flammwidrigen Formkörper wurden folgende mechanische Eigenschaften gemessen:
Raumgewicht [g/l]: 75
Zugfestigkeit nach DIN 53 571 [KPa]: 80
Dehnung nach DIN 53 571 [%]: 71
Weiterreißfestigkeit nach DIN 53 575 [N/mm]: 0,16
Druckverformungsrest nach DIN 53 572 [%]: 9,9

Beispiel 5

A-Komponente:

Mischung aus
85 Teilen eines mit Glycerin gestarteten Polyoxypropylen 86 Gew.%)-polyoxyethylen (14 Gew.%)-polyols mit einem durchschnittlichen Molekulargewicht von 6000,
20 Teilen eines Polyoxypropylen (81 Gew.%)-polyoxyethylen (19 Gew.%)-glykols, mit einem durchschnittlichen Molekulargewicht von ungefähr 3900, hergestellt unter Verwendung von Dipropylenglykol als Startermolekül,

1,2 Teilen Silicon-Stabilisator (Silicon DC 5043 der Firma Dow Corning),

2,4 Teilen Wasser,

10 Teilen Trichlorfluormethan,

0,42 Teilen Triethylendiamin (Dabco® x 540 der Firma Air Products),

0,2 Teilen 2-(Dimethylaminoethoxy)ethanol,

0,15 Teilen Bis-(dimethylaminoethyl)ether,

1,0 Teilen Dibutylzinndilaurat,

0,05 Teilen Dibutyldilaurylzinnmercaptid,

2,00 Teilen Hexandiol-1,6

0,35 Teilen Grünpaste 9650 und

100 Teilen Melamin mit einem Schüttgewicht von 600 g/Liter

B-Komponente:

Urethangruppen enthaltendes Quasiprepolymer mit einem NCO-Gehalt von 31 Gew.% und einer Viskosität von 52 m•Pas bei 25°C, hergestellt aus einem 2,4-/2,6-Toluylendiisocyanat-Isomerengemisch im Gewichtsverhältnis 80:20 und einem Polyoxypropylen-polyoxyethylen-glykol mit einem Molekulargewicht von 3900.

100 Teile der A-Komponente und

22,5 bis 27 Teile

der B-Komponente wurden, entsprechend einem NCO-Index von 100 bis 120, intensiv gemischt und die Reaktionsmischung mit einer Temperatur von 23°C in ein auf 50°C temperiertes metallisches Formwerkzeug mit der inneren Hohlraumform eines Flugzeugsitzes in einer solchen Menge eingebracht, daß sich im geschlossenen Formwerkzeug ein Verdichtungsgrad von 1,2 einstellte.

Das Formteil wurde nach 12 Minuten entformt und 24 Stunden bei Raumtemperatur gelagert.

An dem flammwidrigen Formkörper wurden folgende mechanische Eigenschaften gemessen:

Raumgewicht [g/l]: 70- 80

Zugfestigkeit nach DIN 53 571 [KPa]: 100-110

Dehnung nach DIN 53 571 [%]: 100-120

Weiterreißfestigkeit nach DIN 53 575 [N/mm]: 0,5

Druckverformungsrest nach DIN 53 572 [%]: 7- 8

Beispiel 6

A-Komponente:

analog Beispiel 5, mit der Änderung, daß anstelle des Melamins als Flammschutzmittel eine Mischung aus

85 Gew.-Teilen Melamin,

10 Gew.-Teilen Weizenstärke und

5 Gew.-Teilen Ammoniumpolyphosphat (Exolit® 422 der Firma Hoechst AG) verwendet wurde.

B-Komponente:

analog Beispiel 2

100 Gew.-Teile der A-Komponente und

22,5 bis 27 Gew.-Teile der B-Komponente wurden, entsprechend einem NCO-Index von 100 bis 120, analog den Angaben des Beispiels 5 zu einem flexiblen PU-Formschaumstoff umgesetzt.

Man erhielt einen flammwidrigen PU-Formschaumstoff, dessen mechanische Eigenschaften in den in Beispiel 5 genannten Bereichen lagen.

Beispiel 7

11

A-Komponente:

analog Beispiel 5, wobei jedoch anstelle von Melamin als Flammschutzmittel eine Mischung aus
75 Gew.-Teilen Melamin und
25 Gew.-Teilen Ammoniumpolyphosphat (Exolit$^R$ 422 der Firma Hoechst AG) verwendet wurde.

B-Komponente:

analog Beispiel 3
100 Gew.-Teile der A-Komponente und
21 Gew.-Teile der B-Komponente wurden analog den Angaben des Beispiels 5,
zu einem flexiblen PU-Formschaumstoff umgesetzt.
An dem erhaltenen flammwidrigen Formkörper wurden folgende mechanische Eigenschaften gemessen:
Raumgewicht [g/l]: 70
Zugfestigkeit nach DIN 53 571 [KPa]: 98
Dehnung nach DIN 53 571 [%]: 110
Weiterreißfestigkeit nach DIN 53 575 [N/mm]: 0,45
Druckverformungsrest nach DIN 53 572 [%]: 7,2

Beispiel 8

A-Komponente:

analog Beispiel 5, wobei jedoch anstelle von Melamin als Flammschutzmittel eine Mischung aus
85 Gew.-Teilen Melamin und
15 Gew.-Teilen Kartoffelstärke
verwendet wurde.

B-Komponente:

Mischung aus 2,4- und 2,6-Toluylen-diisocyanat im Gewichtsverhältnis 80:20.
100 Gew.-Teile der A-Komponente und 25 Gew.-Teile der B-Komponente wurden analog den Angaben des Beispiels 5 zu einem flexiblen, flammwidrigen Polyurethan-Formschaumstoff umgesetzt.
Die gemäß Beispiele 1 bis 8 hergestellten Formkörper bestanden den Kerosinbrennertest (FAR 25.823) mit weniger als 10 % Gewichtsverlust und erfüllten somit die derzeit härteste Brandschutzanforderung an Polyurethan-Weichschaumstoffe.
Durch den Einsatz der erfindungsgemäß geeigneten anderen Flammschutzmittel konnte der Melamingehalt reduziert und die Rauchgasdichte verringert werden.

Beispiele 9 bis 14

Messung der Viskosität der A-Komponente in Abwesenheit von Trichlorfluormethan und in Abhängigkeit vom verwendeten Melamin und Kettenverlängerungs- oder Vernetzungsmittel

Mischung aus
75 Teilen eines mit Glycerin gestarteten Polyoxypropylen (86 Gew.%)-polyoxyethylen (14 Gew.%)-polyols mit einem durchschnittlichen Molekulargewicht von 6000,
10 Teilen eines mit Trimethylolpropan gestarteten Pfropf-polyoxypropylen (84 Gew.%)-polyoxyethylen (16 Gew.%)-polyols mit einem durchschnittlichen Molekulargewicht von ungefähr 6000, und einem Pfropfpolymergehalt von 20 Gew.%, bezogen auf das Gesamtgewicht, hergestellt unter Verwendung einer Acrylnitril-Styrol-Mischung zur Pfropfung,
20 Teilen eines Polyoxypropylen (81 Gew.%)-polyoxyethylen (19 Gew.%)-glykols, mit einem durchschnittlichen Molekulargewicht von ungefähr 3900, hergestellt unter Verwendung von Dipropylenglykol als Startermolekül,

1,2 Teilen Silicon-Stabilisator (Silicon DC 5043 der Firma Dow Corning),

2,4 Teilen Wasser,

0,42 Teilen Triethylendiamin (Dabco® x 540 der Firma Air Products),

0,2 Teilen 2-(Dimethylaminoethyoxy)ethanol,

0,15 Teilen Bis-(dimethylaminoethyl)ether,

0,1 Teilen Dibutylzinndilaurat,

0,05 Teilen Dibutyldilaurylzinnmercaptid,

0,35 Teilen Grünpaste 9650 und

100 Teilen Melamin

Der obengenannten Mischung wurden die in der folgenden Tabelle genannten Kettenverlängerungsmittel oder Vernetzungsmittel einverleibt und die Viskosität der erhaltenen Mischung bei 25° C gemessen.

| Beispiele | Melamin | Kettenverlängerungsoder Vernetzungsmittel | | Viskosität bei 25° C |
|---|---|---|---|---|
| | Schüttgewicht [g/Liter] | Art | Menge [Teile] | [m•Pas] |
| 9 (Vergleich) | 440 (U 28) | Diethanolamin | 1 | 12 550 |
| 10 | 440 (U 28) | Trimethylolpropan | 1 | 10 900 |
| 11 | 440 (U 28) | Hexandiol-1,6 | 2 | 10 560 |
| 12 (Vergleich) | 600 (U 24) | Diethanolamin | 1 | 12 210 |
| 13 | 600 (U 24) | Trimethylolpropan | 1 | 8 230 |
| 14 | 600 (U 24) | Hexandiol-1,6 | 2 | 7 600 |

Die Beispiele 9 bis 14 zeigen, daß durch die Verwendung der erfindungsgemäß verwendbaren Kettenverlängerungs- und/oder Vernetzungsmittel die Viskosität der Melamin enthaltenden A-Komponente reduziert und dadurch die Fließfähigkeit der Reaktionsmischung verbessert wurde. Derartige Formulierungen gewährleisten eine sehr gute Füllung von Formwerkzeugen mit schwierig befüllbaren Raumformen, beispielsweise Formwerkzeuge für Flugzeugsitze.

Beispiele 15 bis 17

A-Komponente:

Mischung gemäß den Beispiele 12 bis 14, den zusätzlich als Treibmittel 10,2 Gew.-Teile Trichlorfluormethan einverleibt wurde.

B-Komponente:

Urethangruppe enthaltendes Quasiprepolymer mit einem NCO-Gehalt von 31 Gew.% und einer Viskosität von 52 m•Pas bei 25° C, hergestellt aus einem 2,4-/2,6-Toluylendiisocyanat-Isomerengemisch im Gewichtsverhältnis 80:20 und einem Polyoxypropylen-polyoxyethylen-glykol mit einem Molekulargewicht von 3900.

100 Gew.-Teile der A-Komponente und

22,5 bis 27 Gew.-Teile der B-Komponente wurden analog den Angaben des Beispiels 5 zu einem flexiblen, flammwidrigen PU-Formschaumstoff umgesetzt.

An den erhaltenen Formkörper wurden die folgenden mechanischen Eigenschaften gemessen:

EP 0 377 891 A2

| Beispiele | 15 (Vergleich) | 16 | 17 |
|---|---|---|---|
| A-Komponente nach Beispiel | 12 (Vergleich) | 13 | 14 |
| mechanische Eigenschaften | | | |
| Raumgewicht [g/l] | 80 | 80 | 80 |
| Zugfestigkeit nach DIN 53 571 [KPa] | 70 | 70 | 140 |
| Dehnung nach DIN 53 571 [%] | 110 | 110 | 130 |
| Weiterreißfestigkeit nach DIN 53 575 [N/mm] | 0,35 | 0,45 | 0,65 |
| Druckverformungsrest nach DIN 53 572 [%] | 8 | 8 | 8 |

Die nach den Beispielen 15 und 17 hergestellten Formkörper bestanden den Kerosinbrennertest (FAR 25.823C) mit weniger als 10 Gewichtsverlust.

**Ansprüche**

1. Verfahren zur Herstellung von flammwidrigen, elastischen Polyurethan-Weichschaumstoffen durch Umsetzung von

a) organischen und/oder modifizierten organischen Polyisocyanaten mit

b) höhermolekularen Polyolen und

c) Kettenverlängerungs- und/oder Vernetzungsmitteln

in Gegenwart von

d) mindestens einem Flammschutzmittel,

e) mindestens einem Treibmittel und

f) mindestens einem Katalysator sowie gegebenenfalls

g) Hilfsmitteln und/oder Zusatzstoffen

dadurch gekennzeichnet, daß man als

Kettenverlängerungs- und/oder Vernetzungsmittel (c) Hexandiol-1,6, Trimethylolpropan oder Mischungen davon und als

Flammschutzmittel (d) Melamin oder Mischungen aus Melamin und anderen Flammschutzmitteln verwendet.

2. Verfahren zur Herstellung von flammwidrigen, weichelastischen Polyurethan-Formschaumstoffen nach der Hochdruckschäumtechnik in einem im wesentlichen geschlossenen Formwerkzeug durch Umsetzung von

a) organischen und/oder modifizierten organischen Polyisocyanaten mit

b) höhermolekularen Polyolen und

c) Kettenverlängerungs- und/oder Vernetzungsmitteln

in Gegenwart von

d) mindestens einem Flammschutzmittel,

e) mindestens einem Treibmittel und

f) mindestens einem Katalysator sowie gegebenenfalls

g) Hilfsmitteln und/oder Zusatzstoffen

dadurch gekennzeichnet, daß man als

Kettenverlängerungs- und/oder Vernetzungsmittel (c) Hexandiol-1,6, Trimethylolpropan oder Mischungen davon und als

Flammschutzmittel (d) Melamin oder Mischungen aus Melamin und anderen Flammschutzmitteln verwendet.

3. Verfahren nach einem der Ansprüche 1 oder 2, dadurch gekennzeichnet, daß man als höhermolekulare Polyole (b) Mischungen verwendet aus

b1) höhermolekularen Polyether-polyolen mit einer Funktionalität von durchschnittlich 1,8 bis 3 und

b2) höhermolekularen polymermodifizierten Polyether-polyolen mit einer Funktionalität von durchschnittlich 1,8 bis 3, ausgewählt aus der Gruppe der Pfropfpolyether-polyole, der Polyharnstoff-, Polyhydrazid- und/oder tert. Aminogruppen gebunden enthaltenden Polyurethan-Polyether-polyoldispersionen.

4. Verfahren nach einem der Ansprüche 1 bis 3, dadurch gekennzeichnet, daß man als höhermolekulare Polyole (b) Mischungen verwendet, die enthalten

14

b1) mindestens 70 Gew.%, bezogen auf das Gewicht der Mischung (b), mindestens eines Polyether-polyols mit einer durchschnittlichen Funktionalität von 1,8 bis 3 und einem durchschnittlichen Molekulargewicht von 3600 bis 6500 und

b2) weniger als 30 Gew.%, bezogen auf das Gewicht der Mischung (b), mindestens eines polymermodifizierten Polyether-polyols mit einer durchschnittlichen Funktionalität von 1,8 bis 3 und einem durchschnittlichen Molekulargewicht von 3600 bis 6500, ausgewählt aus der Gruppe der Pfropfpolyether-polyole, der Polyharnstoff-, Polyhydrazid- und tert. Aminogruppen gebunden enthaltenden Polyurethan-Polyether-polyoldispersionen sowie Mischungen davon.

5. Verfahren nach einem der Ansprüche 1 bis 4, dadurch gekennzeichnet, daß man das Melamin in einer Menge von 50 bis 130 Gew.-Teilen pro 100 Gew.-Teilen der höhermolekularen Polyole (b) verwendet.

6. Verfahren nach einem der Ansprüche 1 bis 5, dadurch gekennzeichnet, daß man als Flammschutzmittel (d) Mischungen aus

d1) 70 bis 100 Gew.-Teilen Melamin,

d2) 0 bis 30 Gew.-Teilen, vorzugsweise 3 bis 15 Gew.-Teilen Stärke und/oder

d3) 0 bis 30 Gew.-Teilen, vorzugsweise 3 bis 15 Gew.-Teilen Ammoniumpolyphosphat

verwendet, wobei die Gew.-Teile jeweils bezogen sind auf 100 Gew.-Teile der höhermolekularen Polyole (b).

7. Verfahren nach einem der Ansprüche 1 bis 6, dadurch gekennzeichnet, daß man als Flammschutzmittel (d) Mischungen verwendet aus

d1) 70 bis 100 Gew.-Teilen Melamin und

d3) modifiziertem Ammoniumpolyphosphat,

wobei das Ammoniumpolyphosphat die allgemeine Formel

$$H_{(n-m)+2} (NH_4)_m P_n O_{3n+1}$$

besitzt, in der n eine ganze Zahl mit einem Durchschnittswert von etwa 20 bis 800 bedeutet und das Verhältnis von m zu n etwa 1 beträgt und das modifizierte Ammoniumpolyphosphat besteht aus

etwa 80 bis 99,5 Masse % Ammoniumpolyphosphat und

etwa 0,5 bis 20 Masse % eines gehärteten Epoxidharzes mit einem Epoxid-Äquivalentgewicht von etwa 170 bis etwa 220,

das die einzelnen Ammoniumpolyphosphatteilchen umhüllt.

8. Verfahren nach einem der Ansprüche 1 bis 7, dadurch gekennzeichnet, daß man als Flammschutzmittel (d) Mischungen verwendet aus

d1) 70 bis 100 Gew.-Teilen Melamin und

d2) 3 bis 30 Gew.-Teilen mindestens einer Stärke, ausgewählt aus der Gruppe der Mais-, Reis-, Kartoffel- und Weizenstärke,

wobei die Gew.-Teile bezogen sind auf 100 Gew.-Teile der höhermolekularen Polyole (b).

9. Verfahren nach einem der Ansprüche 1 bis 8, dadurch gekennzeichnet, daß man als Katalysator (f) verwendet eine Katalysatorkombination, die als wesentliche Komponenten enthält: Triethylendiamin, Bis-(dimethylaminoethyl)ether, 2-(Dimethylaminoethoxy)ethanol, Dibutylzinndilaurat und Dibutyldilaurylzinnmercaptid.

10. Niedrigviskose Melamin-Polyether-polyoldispersion, bestehend aus

1 bis 150 Gew.-Teilen Melamin mit einer Teilchengröße von durchschnittlich 20 bis 40 μm und einer Schüttdichte im Bereich von 500 bis 650 g/Liter,

0,1 bis 5 Gew.-Teilen Hexandiol-1,6, Trimethylolpropan oder Mischungen davon und

100 Gew.-Teilen mindestens eines Polyether-polyols, eines polymermodifizierten Polyether-polyols oder Mischungen davon mit einer Funktionalität von 1,8 bis 3 und einem Molekulargewicht von 3600 bis 6500.